# EUROPEAN PATENT APPLICATION

(11) **EP 2 722 761 A1**
(43) Date of publication of application: **23.04.2014**
(21) Application number: 11868012.3
(22) Date of filing: 17.06.2011
(51) Int. Cl.: G06F 11/22

(54) **ARITHMETIC PROCESSING DEVICE AND CONTROL METHOD FOR ARITHMETIC PROCESSING DEVICE**

(71) Applicant: Fujitsu Limited, Kawasaki-shi, Kanagawa 211-8588 (JP)
(72) Inventor: DOI, Masanori, Kawasaki-shi Kanagawa 211-8588 (JP); HARA, Michiharu, Kawasaki-shi Kanagawa 211-8588 (JP); YAMAZAKI, Iwao, Kawasaki-shi Kanagawa 211-8588 (JP); SUNAYAMA, Ryuichi, Kawasaki-shi Kanagawa 211-8588 (JP)
(74) Representative: Fenlon, Christine Lesley
(86) International application number: PCT/JP2011/063925
(87) International publication number: WO 2012/172682

(57) **Abstract**

A CPU (100) that is disclosed by the present application includes a direction controller (121), an I2C command controller (112), and an I2C command execution unit (122). The direction controller (121) decodes a control direction generation direction for generating a control direction that is contained in a program. The I2C command controller (112) generates a state information read direction when the control direction generation direction decoded by the direction controller (121) is a control direction generation direction for generating the state information read direction for reading state information from a failure flag latch (123). The I2C command execution unit (122) reads state information from the failure flag latch (123) based on the state information read direction generated by the I2C command controller (112) so as to store the state information in an I2C receive register (115) that is capable of being read from a program.

## Description

### [Technical Field]

The present invention relates to a processor and a control method of the processor.

### [Background Art]

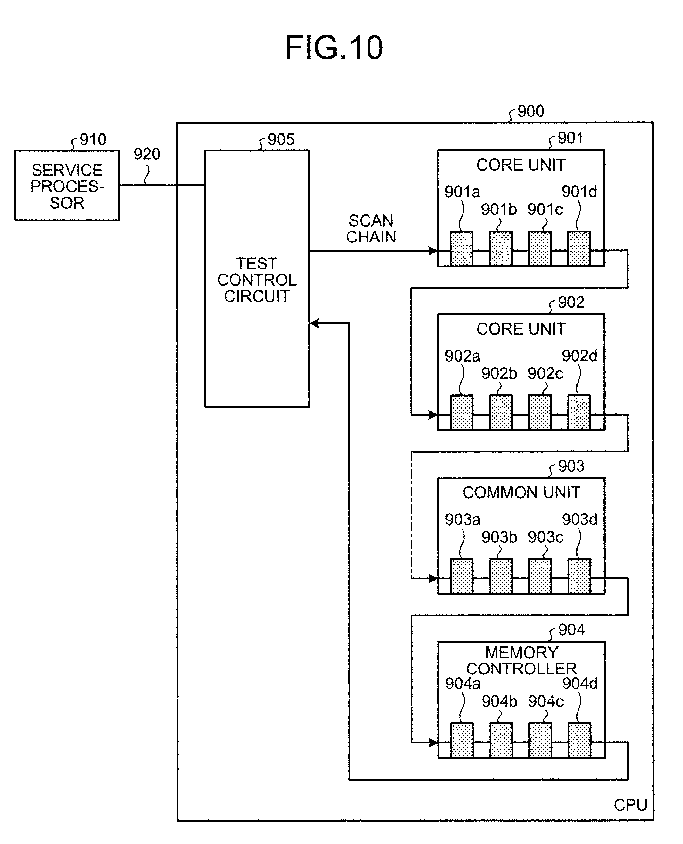

Conventionally, hardware information in a central processing unit (CPU) as a processor is read if a service processor accesses the CPU. Described is a reading operation of the hardware information in the CPU according to a related technique with reference to FIG. 10.

FIG. 10 is a diagram illustrating a reading operation of hardware information in a CPU according to a related technique. As illustrated in FIG. 10, a CPU 900 includes a core unit 901, a core unit 902, a common unit 903, a memory controller 904, and a test control circuit 905. The CPU 900 is connected to a service processor 910 through a bus 920.

The core unit 901 includes therein flip flops (FFs) 901a, 901b, 901c, and 901d as memory circuits. The core unit 902 includes therein FFs 902a, 902b, 902c, and 902d. The common unit 903 includes therein FFs 903a, 903b, 903c, and 903d. The memory controller 904 includes therein FFs 904a, 904b, 904c, and 904d. These FFs are connected in serial so as to form a scan chain.

When failure occurs in the CPU 900, the FF stores therein a failure flag indicating a failure place. When the service processor 910 accesses the test control circuit 905, the test control circuit 905 reads the failure flag stored in the FF by using the scan chain and outputs the read failure flag to the service processor 910. Then, the service processor 910 executes analysis of the failure place by using the read failure flag.

### [Citation List]

### [Patent Literature]

Patent Literature 1: Japanese Laid-open Patent Publication No. 2005-44361
Patent Literature 2: Japanese Laid-open Patent Publication No. 2009-236879
Patent Literature 3: Japanese Laid-open Patent Publication No. 06-139112
Patent Literature 4: Japanese Laid-open Patent Publication No. 2010-218367

In the above-mentioned related technique, there has been a problem that the hardware information in the CPU is unable to be accessed from a program such as an operating system (OS).

To be specific, the hardware information in the CPU is acquired through the service processor. A user of the CPU is not permitted to access the service processor. That is, software such as the OS is incapable of accessing the hardware information in the CPU.

### [Summary of Invention]

### [Technical Problem]

It is an object in one aspect of an embodiment of the invention to provide a processor and a control method of the processor that make it possible to access hardware information in a CPU from a program without using a service processor.

### [Solution to Problem]

To solve the above problem and attain the object, a processor including a circuit unit disclosed in this application, according to an aspect, includes a state information holding unit, a direction controller, a direction generator, and a direction execution unit. The state information holding unit holds state information indicating a state of the circuit unit. The direction controller decodes a control direction generation direction for generating a control direction that is contained in a program. The direction generator generates a state information read direction when the control direction generation direction decoded by the direction controller is a control direction generation direction for generating a state information read direction for reading the state information from the state information holding unit. The direction execution unit reads the state information from the state information holding unit based on the state information read direction generated by the direction generator so as to store the state information in a register unit that is capable of being read from a program.

### [Advantageous Effects of Invention]

Hardware information in a CPU is capable of being accessed from a program without using a service processor.

### [Brief Description of Drawings]

FIG. 1 is a block diagram illustrating a configuration of a CPU according to a first embodiment.
FIG. 2 is a block diagram illustrating a configuration of an I2C command execution unit.
FIG. 3 is a block diagram illustrating a configuration of a failure flag latch.
FIG. 4A is a view illustrating a data pattern of an ASI command "ASI_CMD_ACCESS_REG".
FIG. 4B is a view illustrating a data pattern of an ASI command "ASI_CMD_RECEIVE_REG".
FIG. 5 is a diagram illustrating a reading operation of a failure flag in the CPU.
FIG. 6 is a diagram for explaining an operation in the failure flag latch.
FIG. 7 is a diagram for explaining an operation of a shift register.
FIG. 8 is a flowchart illustrating processing procedures of ASI command issue processing by a direction controller.
FIG. 9 is a flowchart illustrating processing procedures of failure flag reading processing by the I2C command execution unit.
FIG. 10 is a diagram illustrating a reading operation of hardware information in a CPU according to a related technique.

### [Embodiments for Carrying Out the Invention]

Hereinafter, described are embodiments of a processor and a control method of the processor that are disclosed by the present application in detail with reference to the accompanying drawings. The invention is not limited by the embodiments. The respective embodiments are capable of being combined as appropriate in a range where processing contents are consistent with one another.

### First Embodiment

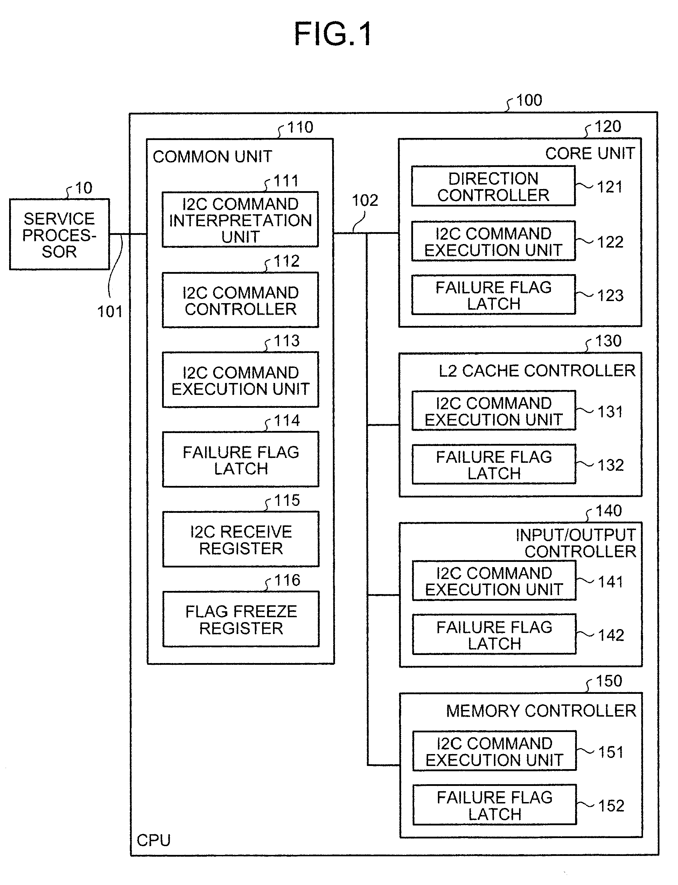

In a first embodiment, described are a configuration of a central processing unit (CPU), processing operations, processing procedures, effects, and the like with reference to FIG. 1 to FIG. 9.

### [Configuration of CPU]

Described is the configuration of the CPU in the first embodiment with reference to FIG. 1. FIG. 1 is a block diagram illustrating the configuration of the CPU in the first embodiment. As illustrated in FIG. 1, a CPU 100 is connected to a service processor 10 through an inter-integrated circuit (I2C) (registered trademark, the same applies hereinafter) 101. The connection between the CPU 100 and the service processor 10 is not limited to connection through the I2C. Alternatively, they may be connected through another bus such as a serial peripheral interface (SPI) (registered trademark), a MicroWire (registered trademark), and a joint test architecture group (JTAG) defined by the IEEE1149.1 standard.

The service processor 10 is a system control device that operates independently of the CPU 100 and controls the CPU 100. For example, the service processor 10 monitors an operating condition in the CPU 100 and acquires an operation history in the CPU 100 so as to diagnose whether the CPU 100 operates normally.

The CPU 100 includes a common unit 110, a core unit 120, an L2 cache controller 130, an input/output controller 140, and a memory controller 150. In the following description, when each of the core unit 120, the L2 cache controller 130, the input/output controller 140, and the memory controller 150 is referred to in a generalized manner, each of them is referred to as a functional block as appropriate. When each of the common unit 110, the core unit 120, the L2 cache controller 130, the input/output controller 140, and the memory controller 150 is referred to in a generalized manner, each of them is referred to as a circuit as appropriate. The number of core unites included in the CPU 100 is not limited thereto and is capable of being changed arbitrarily.

The common unit 110 is connected to the service processor 10 through the I2C 101. The common unit 110 is connected to the core unit 120, the L2 cache controller 130, the input/output controller 140, and the memory controller 150 through an I2C 102. That is to say, the common unit 110 connects the service processor 10 and the respective functional blocks through the I2C 101 and the I2C 102.

The common unit 110 interprets an address space identifier (ASI) command received from the core unit 120 and generates a control command. Note that the ASI command is a memory access direction for accessing an ASI space as an alternate memory space. Then, the common unit 110 accesses pieces of hardware information included in the common unit 110 and the respective functional blocks by using the generated control command. The common unit 110 also receives access from the service processor 10 to access the pieces of hardware information included in the common unit 110 and the respective functional blocks. The ASI command will be described later.

Next, described is a configuration of the common unit 110. As illustrated in FIG. 1, the common unit 110 includes an I2C command interpretation unit 111, an I2C command controller 112, an I2C command execution unit 113, a failure flag latch 114, an I2C receive register 115, and a flag freeze register 116.

The I2C command interpretation unit 111 interprets the ASI command received from a direction controller 121, which will be described later, generates data of functional blocks, registers, and the like to be accessed, and transmits the data to the I2C command controller 112.

For example, when the I2C command interpretation unit 111 receives an ASI command to rewrite state information held by the failure flag latch 114, which will be described later, into specified information from the direction controller 121, the I2C command interpretation unit 111 executes the following processing. That is, the I2C command interpretation unit 111 generates data for rewriting the state information held by the failure flag latch 114 into the specified information. Then, the I2C command interpretation unit 111 transmits the generated data to the I2C command controller 112.

Alternatively, when the I2C command interpretation unit 111 receives an ASI command to read the state information held by the failure flag latch 114 from the direction controller 121, the I2C command interpretation unit 111 generates data for reading the state information from the failure flag latch 114. Then, the I2C command interpretation unit 111 transmits the generated data to the I2C command controller 112.

The I2C command controller 112 receives the data from the I2C command interpretation unit 111 and generates a control command based on the received data. Then, the I2C command controller 112 transmits the generated control command to the I2C command execution unit 113, which will be described later, or a specified I2C command execution unit among I2C command execution units of the respective functional blocks. In the following description, the control command that is generated by the I2C command controller 112 is referred to as an I2C command as appropriate. The I2C command is an example of a control direction that is transmitted to circuits connected through a data bus.

For example, the I2C command controller 112 issues the I2C command and transmits the IC command to the I2C command execution units of the respective functional blocks so as to rewrite and read values of respective setting registers. As an example, the I2C command controller 112 issues the I2C command so as to set a shift number to a shift length register 113b, which will be described later.

When the direction controller 121 issues an ASI command to collect failure flags, the I2C command controller 112 generates an I2C command to collect the failure flags, and transmits the generated I2C command to the specified I2C command execution unit.

The I2C command execution unit 113 receives the I2C command from the I2C command controller 112 and executes an operation based on the received I2C command. For example, the I2C command execution unit 113 reads a register specified by the I2C command controller 112 and transfers the read result to the I2C command controller 112. As an example, the I2C command execution unit 113 receives the I2C command from the I2C command controller 112 and reads a failure flag from the failure flag latch 114. Then, the I2C command execution unit 113 transfers the read failure flag to the I2C receive register 115, which will be described later.

Furthermore, the I2C command execution unit 113 receives the I2C command from the I2C command controller 112 and rewrites the information held by the failure flag latch 114 into the specified information.

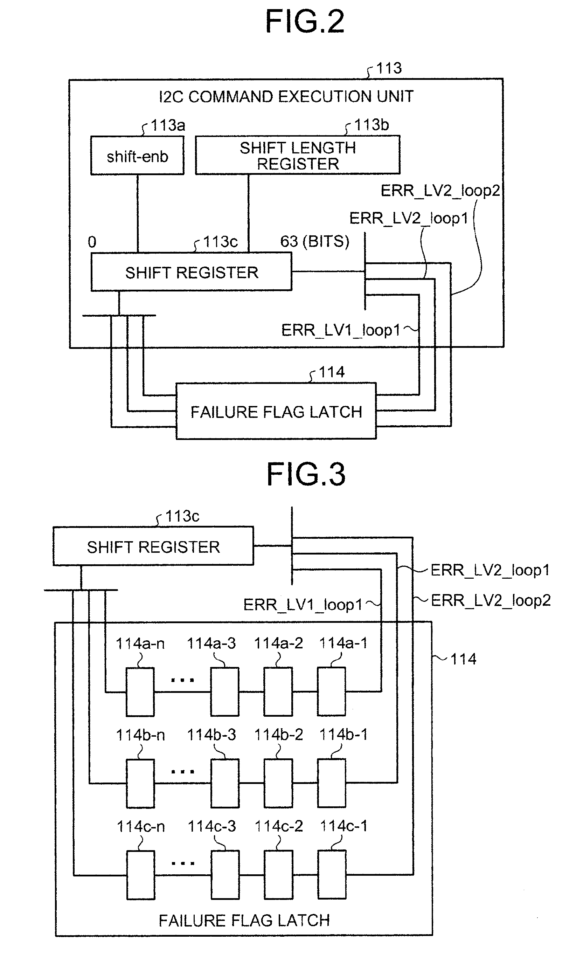

Described is a configuration of the I2C command execution unit 113 with reference to FIG. 2. FIG. 2 is a block diagram illustrating the configuration of the I2C command execution unit. As illustrated in FIG. 2, the I2C command execution unit 113 includes a shift-enb 113a, the shift length register 113b, and a shift register 113c.

The shift-enb 113a receives an I2C command "READ-SHIFT-REG" that permits to shift data held by the shift register 113c from the I2C command controller 112. Then, the shift-enb 113a converts the received I2C command "READ-SHIFT-REG" to a shift-enb signal and outputs it to the shift register 113c. As a result, the shift register 113c shifts the holding data.

The shift length register 113b holds the number of shifts of scan shift by the shift register 113c. The number of shifts that is held by the shift length register 113b is set by the I2C command transmitted by the I2C command controller 112. For example, when the failure flag is read from the failure flag latch 114, a value set to the shift length register 113b is set to the same value as a bit number of the failure flag latch 114 from which the failure flag is read. In other words, when the failure flag latch 114 holds data of 64 bits, the value of the shift length register 113b is set to 64 bits. Then, the value set to the shift length register 113b is subtracted one by one every time the failure flag is read to the shift register 113c by 1 bit by the scan shift.

The shift register 113c is a 64-bit (bit 0 to bit 63) shift register dedicated to the failure flag and is connected to the shift-enb 113a and the shift length register 113b. The bit 0 of the shift register 113c is connected to an output terminal of the failure flag latch 114 and the bit 63 of the shift register 113c is connected to an input terminal of the failure flag latch 114.

When the shift register 113c receives the shift-enb signal as a signal that permits to shift the data from the shift-enb 113a, the shift register 113c reads the failure flag from the failure flag latch 114 and holds the read failure flag. Then, the data stored in the shift register 113c is transferred to the I2C receive register 115.

The shift register 113c may hold a value specified from the service processor 10.

Returning to FIG. 1, the failure flag latch 114 holds state information indicating states of the circuits. For example, the failure flag latch 114 holds a failure flag indicating a failure state of the common unit 110. Described is a configuration of the failure flag latch with reference to FIG. 3. FIG. 3 is a block diagram illustrating the configuration of the failure flag latch.

For example, as illustrated in FIG. 3, the failure flag latch 114 includes loops of a ERR_LV1_loop1, ERR_LV2_loop1 and ERR_LV2_loop2 each of which is formed by a plurality of flip flops (FFs).

The respective loops included in the failure flag latch 114 are used differently in accordance with the degree of failure. For example, the ERR_LV1 is used for failures indicating significant failures that influence a system operation and the ERR_LV2 is used for minor errors that do not influence the system operation. The respective FFs are used in association with types of failures. The number of loops is determined in accordance with the number of FFs storing failures. Description is made herein while the ERR_LV2 is assumed to include two loops of the ERR_LV2_loop1 and the ERR_LV2_loop2.

For example, the ERR_LV1_loop1 includes an FF 114a-1, an FF 114a-2, an FF 114a-3, ..., and an FF 114a-n. The ERR_LV2_loop1 includes an FF 114b-1, an FF 114b-2, an FF 114b-3, ..., and an FF 114b-n, and the ERR_LV2_loop2 includes an FF 114c-1, an FF 114c-2, an FF 114c-3, ..., and an FF 114c-n. Note that n is an arbitrary natural number here.

The I2C receive register 115 is a register that holds 64-bit data read by the scan shift control by the I2C command execution unit 113. The data that is held by the I2C receive register 115 is capable of being read to the program such as the OS if the direction controller 121, which will be described later, issues the ASI command. That is to say, the I2C receive register 115 is a register that is capable of being accessed from the software.

The flag freeze register 116 holds information indicating whether changes of values that are held by the failure flag latch 114 and failure flag latches included in the respective functional blocks are permitted. The flag freeze register 116 stores therein "1" indicating that update of the value of the failure flag that is held by the failure flag latch 114 is suppressed and "0" indicating that update of the value of the failure flag that is held by the failure flag latch is permitted. That is to say, the failure flag latch 114 and the failure flag latches included in the respective functional blocks keep holding the state information without updating the holding state information while the flag freeze register 116 stores therein "1".

Returning to FIG. 1, the core unit 120 includes the direction controller 121, an I2C command execution unit 122, and a failure flag latch 123. For example, the core unit 120 reads a direction from an L1 cache (not illustrated) and executes the direction.

The direction controller 121 decodes a direction of a running program that has been read from the L1 cache (not illustrated) included in the core unit 120 and executes the decoded direction. When the read direction is a direction to issue an I2C command, the direction controller 121 issues an ASI command.

Described is the ASI command. Japanese Laid-open Patent Publication No. 2010-218367 describes details of the ASI command, so that the ASI command is described simply here.

The ASI command is a command specifying an identifier called an 8-bit ASI space number that identifies an ASI space. The ASI space number makes it possible to specify an operation of converting a virtual address into a physical address and specify reading and writing of registers included in the CPU 100.

In the embodiment, one ASI space number is defined newly and two virtual addresses are allocated to the ASI space number defined newly. The ASI command specifies the ASI space number allocated newly and the virtual addresses, so that the common unit 110 executes the I2C command as access to the specified virtual addresses.

In the embodiment, the ASI command has two virtual addresses "ASI_CMD_ACCESS_REG" and "ASI_CMD_RECEIVE_REG". The "ASI_CMD_ACCESS_REG" is a direction to issue the I2C command and the "ASI_CMD_RECEIVE_REG" is a direction to read the result by the issued I2C command. Hereinafter, described is a data pattern of the ASI command.

### (ASI_CMD_ACCESS_REG)

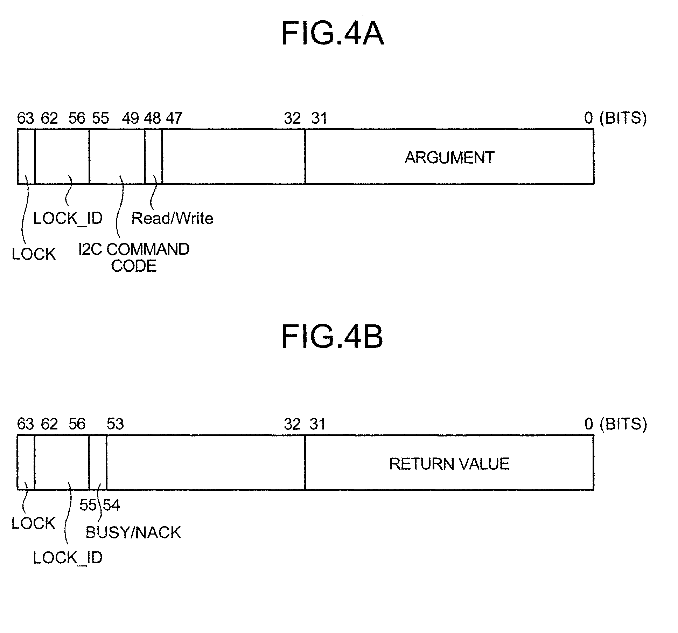

Described is a data pattern of the ASI command "ASI_CMD_ACCESS_REG" with reference to FIG. 4A. FIG. 4A is a view illustrating the data pattern of the ASI command "ASI_CMD_ACCESS_REG". As illustrated in FIG. 4A, the "ASI_CMD_ACCESS_REG" has a data pattern of 64-bit data and issues an I2C command.

The bit 63 is a LOCK bit and indicates that the I2C command is being executed. That is to say, the bit 63 indicates specification of exclusive control to avoid contention of the I2C command.

The bit 62 to the bit 56 indicate LOCK_ID. The LOCK_ID is information indicating a functional block that is executing the I2C command. Note that values previously specified for the respective functional blocks are stored.

The bit 55 to the bit 49 indicate an I2C command code. The bit 48 is Read/Write and stores therein information specifying reading of the register or writing into the register. The bit 47 to the bit 32 are not used in the embodiment. The bit 31 to the bit 0 indicate an argument to the I2C command.

In the following description, when data of the bit 62 to the bit 56 is indicated, the data is referred to as data [62:56] as appropriate.

In the following description, a part of the data pattern of the "ASI_CMD_ACCESS_REG" command is represented as asi_cmd_access_reg.LOCK, asi_cmd_access_reg.LOCK_ID, or the like as appropriate.

### (ASI_CMD_RECEIVE_REG)

Next, described is a data pattern of the ASI command "ASI_CMD_RECEIVE_REG" with reference to FIG. 4B. FIG. 4B is a view illustrating the data pattern of the ASI command "ASI_CMD_RECEIVE_REG". As illustrated in FIG. 4B, the "ASI_CMD RECEIVE_REG" is a command to read a result by the I2C command and the data pattern of 64-bit data for reading is defined as follows.

The bit 63 indicates a LOCK bit. The LOCK bit stores therein information indicating whether an execution right of the I2C command has been capable of being acquired as a result of the exclusive control.

The bit 62 to the bit 56 indicate LOCK_ID. The LOCK_ID field stores therein information indicating a functional block that is being accessed.

The bit 55 to the bit 54 indicate BUSY/NACK. BUSY indicates that the I2C command is being executed. Negative ACKnowledgement (NACK) indicates that the I2C command was unable to be executed. When a value of data [55:54] is "01", an error code indicating that error is generated with the execution of ASI_CMD is set to the bit 31 to the bit 28.

The bit 53 to the bit 32 are not used in the embodiment. The bit 31 to the bit 0 indicate a return value of the I2C command and read data.

In the following description, a part of the data pattern of the "ASI_CMD_RECEIVE_REG" command is represented as asi_cmd_receive_reg.LOCK, asi_cmd_receive_reg.LOCK_ID, or the like as appropriate.

The direction controller 121 issues the ASI command to execute the following processing. That is to say, the direction controller 121 issues the ASI command to cause the common unit 110 to generate the I2C command and cause the I2C command execution unit to execute the generated I2C command. In this case, the direction controller 121 transfers ASI data [63:0] to the I2C command interpretation unit 111.

The direction controller 121 can specify a specific ASI space number previously so as to execute reading and writing of the register in the CPU 100.

Returning to FIG. 1, for example, the I2C command execution unit 122 receives the I2C command from the I2C command controller 112 and reads a failure flag from the failure flag latch 123. Then, the I2C command execution unit 122 transfers the read failure flag to the I2C receive register 115. The configuration of the I2C command execution unit 122 is the same as the configuration of the I2C command execution unit 113, so that description thereof is omitted. Furthermore, the configuration of the failure flag latch 123 is the same as the configuration of the failure flag latch 114, so that description thereof is omitted.

The L2 cache controller 130 has an L2 cache (not illustrated) and determines whether data or a direction requested from the core unit 120 is present in the L2 cache. When the L2 cache controller 130 determines that the requested data or direction is present in the L2 cache, the L2 cache controller 130 reads the requested data or direction from the L2 cache and transfers it to the L1 cache.

The L2 cache controller 130 includes an I2C command execution unit 131 and a failure flag latch 132. For example, the I2C command execution unit 131 receives an I2C command from the I2C command controller 112 and reads a failure flag from the failure flag latch 132. Then, the I2C command execution unit 131 transfers the read failure flag to the I2C receive register 115. The configuration of the I2C command execution unit 131 is the same as the configuration of the I2C command execution unit 113, so that description thereof is omitted. The configuration of the failure flag latch 132 is the same as the configuration of the failure flag latch 114, so that description thereof is omitted.

The input/output controller 140 includes an interface that connects the CPU and an input/output device (not illustrated) and controls data exchange between the CPU and the input/output device. The input/output controller 140 includes an I2C command execution unit 141 and a failure flag latch 142. For example, the I2C command execution unit 141 receives an I2C command from the I2C command controller 112 and reads a failure flag from the failure flag latch 142. Then, the I2C command execution unit 141 transfers the read failure flag to the I2C receive register 115. The configuration of the I2C command execution unit 141 is the same as the configuration of the I2C command execution unit 113, so that description thereof is omitted. The configuration of the failure flag latch 142 is the same as the configuration of the failure flag latch 114, so that description thereof is omitted.

The memory controller 150 controls data exchange with a main storage device (not illustrated). The memory controller 150 includes an I2C command execution unit 151 and a failure flag latch 152. For example, the I2C command execution unit 151 receives an I2C command from the I2C command controller 112 and reads a failure flag from the failure flag latch 152. Then, the I2C command execution unit 151 transfers the read failure flag to the I2C receive register 115. The configuration of the I2C command execution unit 151 is the same as the configuration of the I2C command execution unit 113, so that description thereof is omitted. The configuration of the failure flag latch 152 is the same as the configuration of the failure flag latch 114, so that description thereof is omitted.

### [Processing Operation]

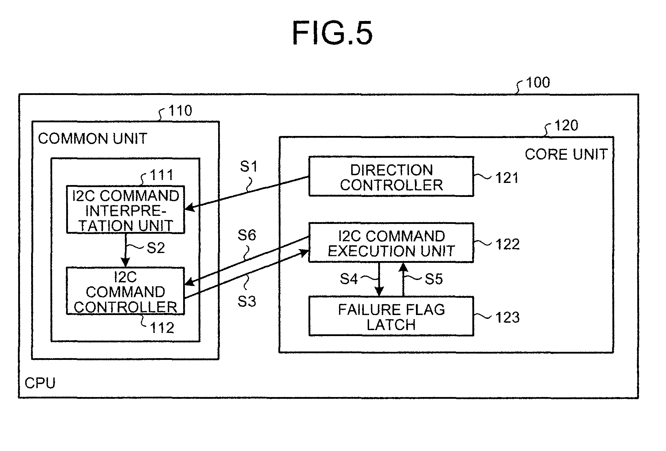

Next, described is a processing operation in the CPU with reference to FIG. 5 to FIG. 7.

### (Reading Operation of Failure Flag by I2C Command)

Then, described is a reading operation of the failure flag in the CPU 100 with reference to FIG. 5. FIG. 5 is a diagram illustrating the reading operation of the failure flag in the CPU. In FIG. 5, described is a reading operation of a failure flag in the core unit 120. The operation is the same as reading operations of failure flag in the common unit 110, the L2 cache controller 130, the input/output controller 140, and the memory controller 150.

As illustrated in FIG. 5, the direction controller 121 included in the CPU 100 issues "ASI_CMD_ACCESS_REG" for directing to read the failure flag, and transmits ASI data [63:0] to the I2C command interpretation unit 111 (S1). Then, the I2C command interpretation unit 111 decodes the received ASI data, generates data of functional blocks, registers, and the like to be accessed, and transmits the data to the I2C command controller 112 (S2).

The I2C command controller 112 converts the received data into an I2C command and transmits it to the I2C command execution unit 122 (S3). Subsequently, the I2C command execution unit 122 starts reading of the failure flag directed from the failure flag latch 123 (S4) and acquires the failure flag (S5). Then, the I2C command execution unit 122 transmits the read result to the I2C receive register 115 (S6). The I2C receive register 115 holds the failure flag received from the I2C command execution unit 122 in the data [63:0].

Thereafter, the direction controller 121 issues a "ASI_CMD_RECEIVE_REG" direction to read data [31:0] of the I2C receive register 115 and stores it in 32 bits at the low-order side of the I2C receive register 115. Subsequently, the direction controller 121 specifies a CODE "02" and issues "ASI_CMD_ACCESS_REG" so as to read data [63:32] of the I2C receive register 115 and stores it in 32 bits at the high-order side of the I2C receive register 115. That is to say, the direction controller 121 stores the failure flag in the I2C receive register 115 that is capable of being accessed from the program by executing the ASI command. Thus, the direction controller 121 causes the failure flag acquired by executing the ASI command to be held in the I2C receive register 115 that is capable of being used from the program.

### (Processing Operation in Failure Flag Latch)

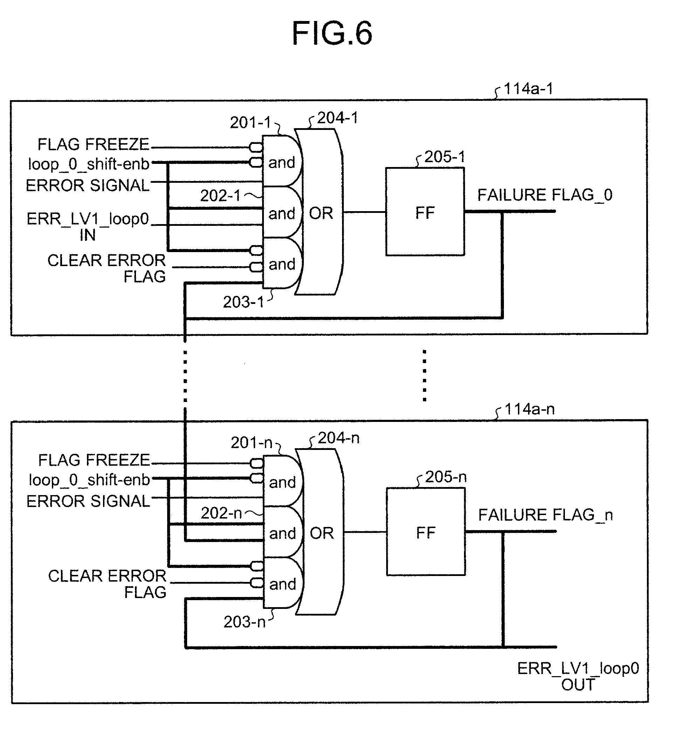

Described next is an operation in the failure flag latch 114 with reference to FIG. 6. FIG. 6 is a diagram for explaining the operation in the failure flag latch. Although the processing operation is described by using ERR_LV1_loop1 of the failure flag latch 114 included in the common unit 110 as an example, the processing operation is the same in the failure flag latches included in the respective functional blocks.

As illustrated in FIG. 6, the ERR_LV1_loop1 of the failure flag latch 114 includes the FF 114a-1, ... the FF 114a-n. The FF 114a-1 includes an AND circuit 201-1, an AND circuit 202-1, an AND circuit 203-1, an OR circuit 204-1, and an FF 205-1.

The AND circuit 201-1 receives an inverted flag freeze signal, an inverted loop_0_shift-enb signal, and an error signal, and outputs an AND of the received values to the OR circuit 204-1. The AND circuit 202-1 receives a loop_0_shift-enb signal and data from the shift register 113c and outputs an AND of the received values to the OR circuit 204-1. The AND circuit 203-1 receives the inverted loop_0_shift-enb signal, an inverted clear error flag signal, and output from the FF 205-1, and outputs an AND of the received values to the OR circuit 204-1.

The OR circuit 204-1 receives outputs from any two of the AND circuit 201-1, the AND circuit 202-1, and the AND circuit 203-1, and outputs an OR of the received values. Then, the OR circuit 204-1 receives the output OR and output from the remaining AND circuit, and outputs an OR of the received values to the FF 205-1. The FF 205-1 outputs the received value to the AND circuit 203-1 and an AND circuit 202 of an adjacent FF.

The configuration of the FF 114a-n is the same as the configuration of the FF 114a-1, so that description thereof is omitted.

Described is an operation when the failure flag latch 114 does not receive a signal that permits to shift data. It is assumed that the FF 205-1 stores therein "1" and the FF 205-n stores therein "0", and the flag freeze signal and the clear error flag signal are not input to the failure flag latch 114.

In this case, the AND circuit 201-1 receives an inverted flag freeze signal "1", an inverted loop_0_shift-enb signal "1", and an error signal "1", and outputs "1" to the OR circuit 204-1. The AND circuit 202-1 receives no signal, and outputs "0" to the OR circuit 204-1. The AND circuit 203-1 receives the inverted loop_0_shift-enb "1", an inverted clear error flag signal "1", and output "1" of the FF 205-1, and outputs "1" to the OR circuit 204-1.

The OR circuit 204-1 receives "1" from the AND circuit 201-1, "0" from the AND circuit 202-1, and "1" from the AND circuit 203-1, and outputs "1" to the FF 205-1. The FF 205-1 outputs "1" to the AND circuit 203-1, so that "1" received by the FF 205-1 is kept.

Described is an operation when the failure flag latch 114 in this state receives a signal that permits to shift data from the shift register 113c. It is assumed that the shift register 113c stores therein "0".

In this case, the AND circuit 201-1 receives an inverted flag freeze signal "0", an inverted loop_0_shift-enb signal "0", and an error signal "0", and outputs "0" to the OR circuit 204-1. The AND circuit 202-1 receives a loop_0_shift-enb signal "1" and "0" stored in the shift register 113c, and outputs "0" to the OR circuit 204-1. The AND circuit 203-1 receives the inverted loop_0_shift-enb signal "0", an inverted clear error flag signal "1", and output "1" of the FF 205-1, and outputs "0" to the OR circuit 204-1.

Then, the OR circuit 204-1 outputs "0" from all of the AND circuit 201-1, the AND circuit 202-1, and the AND circuit 203-1, and outputs "0" to the FF 205-1. "1" stored in the FF 205-1 is output to an AND circuit 202-2 included in the adjacent FF 114a-2 and the FF shifts to an FF 205-2.

In this manner, when the failure flag latch 114 receives the signal that permits to shift data from the shift register 113c, the failure flag latch 114 shifts data by the number of pieces of data that are held in the shift length register 113b. As a result, the data held in the failure flag latch 114 is made to shift to the shift register 113c.

### (Processing Operation in Shift Register)

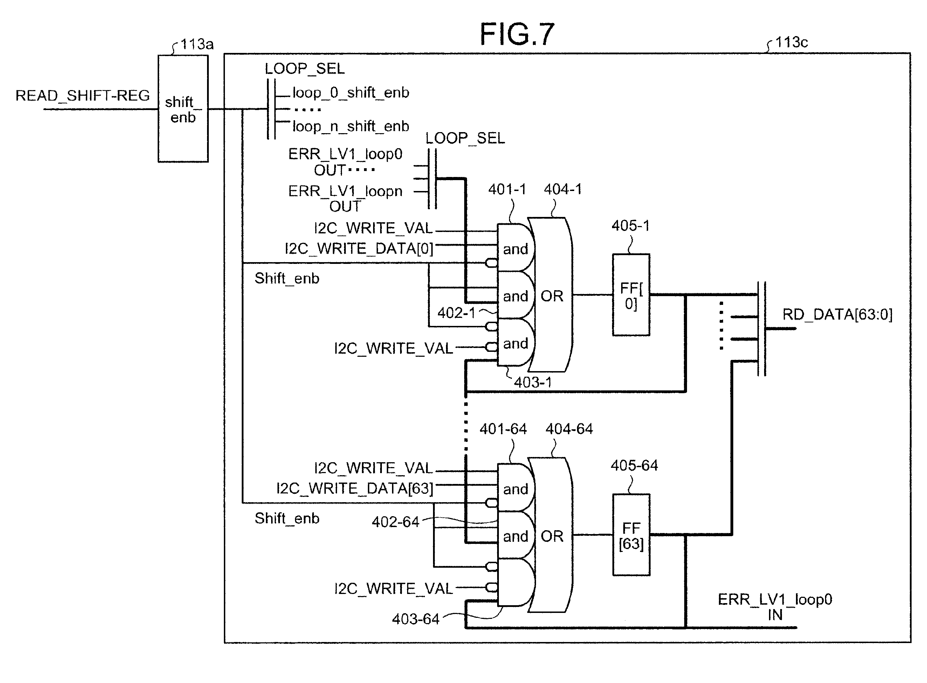

Next, described is an operation of the shift register 113c with reference to FIG. 7. FIG. 7 is a diagram for explaining the operation of the shift register. Although described is the operation of the shift register by using the shift register 113c included in the common unit 110 as an example, the processing operation is the same in the shift registers included in the respective functional blocks.

As illustrated in FIG. 7, the shift register 113c includes an AND circuit 401-1, an AND circuit 402-1, an AND circuit 403-1, an OR circuit 404-1, and an FF 405-1. Furthermore, the shift register 113c includes an AND circuit 401-n, an AND circuit 402-n, an AND circuit 403-n, an OR circuit 404-n, and an FF 405-n in the same manner.

The AND circuit 401-1 receives an I2C_WRITE_VAL signal, an I2C_WRITE_DATA[0] signal, and an inverted shift-enb signal, and outputs an AND of the received values to the OR circuit 404-1. The AND circuit 402-1 receives a shift-enb signal and data from a selected loop, and outputs an AND of the received values to the OR circuit 404-1. The AND circuit 403-1 receives the inverted shift-enb signal, an inverted I2C_WRITE_VAL signal, and output from the FF 405-1, and outputs an AND of the received values to the OR circuit 404-1.

The OR circuit 404-1 receives outputs from any two of the AND circuit 401-1, the AND circuit 402-1, and the AND circuit 403-1, and outputs an OR of the received values. Then, the OR circuit 404-1 receives the output OR and output from the remaining AND circuit, and outputs an OR of the received values to the FF 405-1. The FF 405-1 outputs the received value to the AND circuit 403-1 and an adjacent AND circuit 402-2.

Described is an operation when the shift register 113c does not receive a signal that permits to shift data from the shift-enb 113a. It is assumed that the FF 405-1 stores therein "0", and the I2C_WRITE_VAL signal and the I2C_WRITE_DATA[0] signal are not input to the shift register 113c.

In this case, the AND circuit 401-1 receives an inverted shift-enb signal "1", and outputs "0" to the OR circuit 404-1. The AND circuit 402-1 receives no signal, and outputs "0" to the OR circuit 404-1. The AND circuit 403-1 receives the inverted shift-enb signal "1", an inverted I2C_WRITE_VAL signal "1", and output "0" of the FF 405-1, and outputs "0" to the OR circuit 404-1.

The OR circuit 404-1 receives "0" from all of the AND circuit 401-1, the AND circuit 402-1, and the AND circuit 403-1, and outputs "0" to the FF 405-1. The FF 405-1 outputs "0" to the AND circuit 403-1, so that "0" received by the FF 405-1 is kept.

Described is an operation when the shift register 113c in this state receives a signal that permits to shift data from the shift-enb 113a. It is assumed that the FF 114a-n included in the failure flag latch stores therein "1".

In this case, the AND circuit 401-1 receives an inverted shift-enb signal "0", and outputs "0" to the OR circuit 404-1. The AND circuit 402-1 receives a shift-enb signal "1" and "1" stored in the FF 114a-n, and outputs "1" to the OR circuit 404-1. The AND circuit 403-1 receives the inverted shift-enb signal "0", an inverted I2C_WRITE_VAL signal "1", and output "0" of the FF 405-1, and outputs "0" to the OR circuit 404-1.

Then, the OR circuit 404-1 receives "0" from the AND circuit 401-1, "1" from the AND circuit 402-1, and "0" from the AND circuit 403-1, and outputs "1" to the FF 405-1. "0" stored in the FF 405-1 is output to the adjacent AND circuit 402-2 and the FF shifts to an FF 405-2.

In this manner, when the shift register 113c receives the signal that permits to shift data from the shift-enb 113a, the shift register 113c shifts the data by the number of pieces of data that are held in the shift length register 113b. As a result, the data held in the failure flag latch 114 is made to shift to the shift register 113c.

### [Processing Procedures of Failure Flag Acquisition Processing]

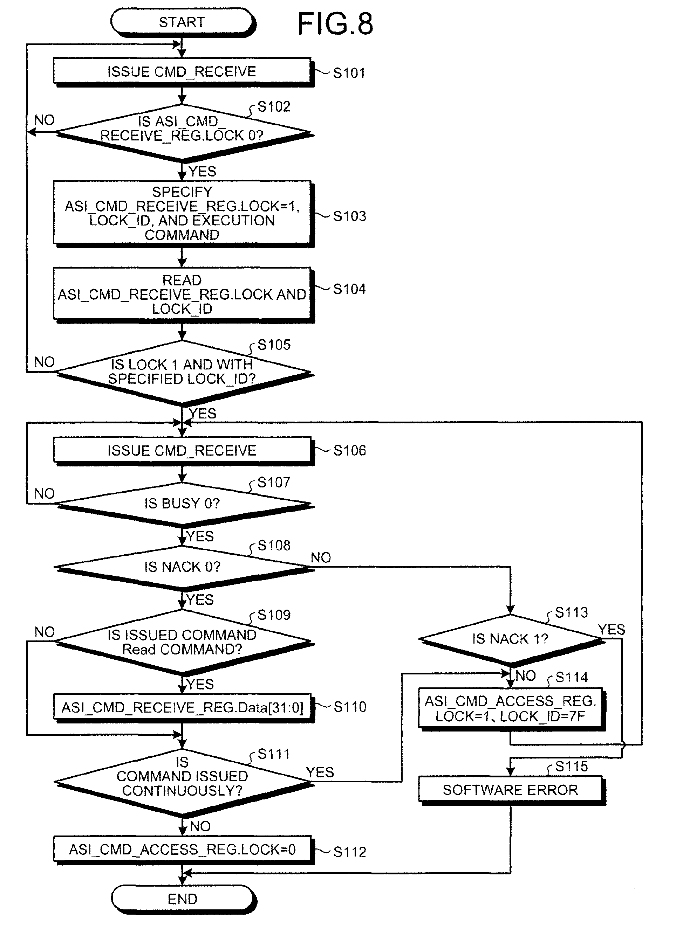

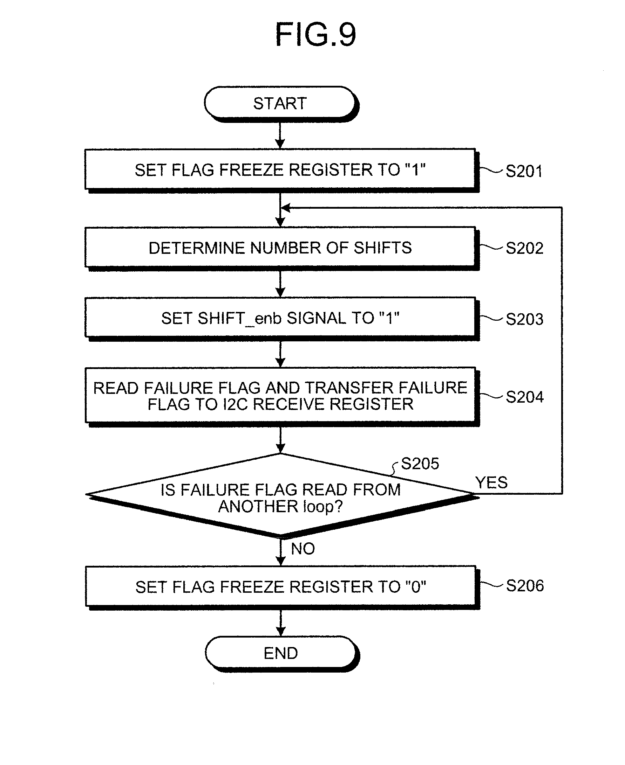

Next, described are processing procedures of failure flag acquisition processing in the CPU 100 in the first embodiment with reference to FIG. 8 and FIG. 9. FIG. 8 explains processing procedures of ASI command issue processing by the direction controller and FIG. 9 explains processing procedures of failure flag reading processing by the I2C command execution unit.

### (ASI Command Issue Processing by Direction Controller)

FIG. 8 is a flowchart illustrating the processing procedures of the ASI command issue processing by the direction controller. As illustrated in FIG. 8, the direction controller 121 issues an "ASI_CMD_RECEIVE_REG" direction (S101). Then, the direction controller 121 reads asi_cmd_receive_reg.LOCK bit and determines whether the read value is "0" (S102).

When the direction controller 121 determines that the read value is not "0" (No at S102), the process proceeds to S101. That is to say, the direction controller 121 determines that another processor unit or the service processor 100 is executing the I2C command. Accordingly, when the read value is not "0", the direction controller 121 waits for completion of the I2C command by another processor unit or the service processor 100. Then, the direction controller 121 issues the I2C command after completion of the I2C command by another processor unit or the service processor 100. The direction controller 121 issues the "ASI_CMD_RECEIVE_REG" direction repeatedly at predetermined intervals until the read value is "0".

On the other hand, when the direction controller 121 determines that the read value is "0" (Yes at S102), the direction controller 121 determines that the I2C command through the ASI command is capable of being executed and executes the following processing. That is to say, the direction controller 121 specifies LOCK=1, LOCK_ID of a functional block to be controlled, and an execution command to issue an "ASI_CMD_ACCESS_REG" direction (S103).

Subsequently, the direction controller 121 issues an "ASI_CMD_RECEIVE_REG" direction (S104). Then, the direction controller 121 reads asi_cmd_receive_reg.LOCKbit and LOCK_ID and determines whether the read value is "1" and the LOCK_ID is specified LOCK_ID (S105).

When the direction controller 121 determines that any of the two conditions including the read value of "1" and the specified LOCK_ID is not satisfied (No at S105), the process proceeds to S101. This indicates that the execution right of "ASI_CMD_ACCESS_REG" issued at S103 fails to be acquired and the direction is not executed.

On the other hand, when the direction controller 121 determines that the two conditions are satisfied (Yes at S105), the direction controller 121 issues an "ASI_CMD_RECEIVE_REG" direction (S106).

Then, the direction controller 121 determines whether asi_cmd_receive_reg.BUSY is "0" (S107). When the direction controller 121 determines that BUSY is not "0" (No at S107), the process proceeds to S106. Then, the direction controller 121 repeats the processing until BUSY is "0". In this case, the direction controller 121 determines that the I2C command issued at S103 is being executed by the I2C command execution unit.

On the other hand, when the direction controller 121 determines that BUSY is "0" (Yes at S107), the direction controller 121 determines whether asi_cmd_receive_reg.NACK is "0" (S108). When the direction controller 121 determines that NACK is "0" (Yes at S108), the direction controller 121 determines whether the command issued at S103 is a Read command to read states of the functional blocks (S109).

When the direction controller 121 determines that the command is the Read command (Yes at S109), the direction controller 121 reads data [31:0] (S110) and the process proceeds to S111. On the other hand, when the direction controller 121 determines that the command is not the Read command (No at S109), the process proceeds to S111.

The direction controller 121 determines whether it issues a new command continuously at S111 (S111). When the direction controller 121 determines that it does not issue the new command continuously (No at S111), the direction controller 121 issues an "ASI_CMD_ACCESS_REG" direction while setting the asi_cmd_access_reg.LOCK to "0" (S112). With the direction, the direction controller 121 resigns the exclusive control right of the I2C command by the ASI command and finishes a series of I2C command processing. On the other hand, when the direction controller 121 determines that it issues the new command continuously (Yes at S111), the process proceeds to S114.

When the direction controller 121 determines that NACK is not "0" at S108 (No at S108), the direction controller 121 determines whether asi_cmd_receive_reg.NACK is "1" (S113). When the direction controller 121 determines that NACK is not "1" (No at S113), the process proceeds to S114.

On the other hand, when the direction controller 121 determines that NACK is "1" (Yes at S113), the direction controller 121 determines that a software error is generated (S115) and the processing is finished. In this case, the direction controller 121 notifies the service processor 10 of generation of the software error.

The direction controller 121 specifies LOCK=1 and LOCK_ID=7F and issues an "ASI_CMD_ACCESS_REG" direction at S114 (S114) and the process shifts to S106.

(Failure Flag Reading Processing by I2C Command Execution Unit)

FIG. 9 is a flowchart illustrating processing procedures of failure flag reading processing by the I2C command execution unit. For example, the I2C command execution unit executes the processing on reception of access from the I2C command controller 112.

As illustrated in FIG. 9, the flag freeze register 116 is set to "1" for the I2C command execution unit of the functional block from which the failure flag is read is set (S201). Then, the I2C command execution unit determines the number of shifts for the shift length register (S202) and sets a SHIFT_enb signal to "1" (S203).

When the SHIFT_enb signal becomes "1" in the I2C command execution unit, a failure flag connected to LOOP0 is selected to be read as 64-bit data to the shift register. When the 64-bit data is read to the shift register, the SHIFT_enb signal becomes "0".

Subsequently, the I2C command execution unit transfers the read data to the I2C receive register capable of being accessed from the program that is included in the I2C command controller (S204). The I2C command execution unit further determines whether it receives access to read a failure flag from another loop (S205). When the I2C command execution unit determines that it receives access to read the failure flag from another loop (Yes at S205), the process proceeds to S202 and the I2C command execution unit executes the failure flag reading processing.

On the other hand, when the I2C command execution unit determines that it does not receive access to read the failure flag from another loop (No at S205), the flag freeze register 116 is set to "0" (S206) and the processing is finished.

### [Effects by First Embodiment]

As described above, in the first embodiment, the common unit 110 and the respective functional blocks include the I2C command execution units. When the direction controller 121 issues the ASI command to collect the failure flags, the I2C command controller 112 generates the I2C command to collect the failure flag and transmits the generated I2C command to the common unit 110 and the respective functional blocks. This enables the I2C command execution units to read the failure flags that are held in the failure flag latches. That is to say, in the CPU 100 in the first embodiment, the failure flags in the CPU 100 are capable of being read without scanning out the failure flags by using the scan chain from the service processor 10.

By incorporating the above-mentioned circuits into the I2C command execution units of the respective functional blocks, all the errors generated on other functional blocks are capable of being loaded onto the failure flag latches while the failure flag in one functional block is read. The respective functional blocks are capable of being controlled by writing values that have been previously specified for the respective functional blocks into asi_cmd_access_reg.LOCK_ID.

In recent years, the size of the CPU is increased with development of system on chip (SoC). For this reason, when a simulation model of the CPU overall is created and simulation running a test bench for system control is performed, a compile time and a running time of the test bench become longer. That is to say, it becomes more difficult to execute the simulation on the CPU overall. When the CPU is examined by using an emulator in the invention, a system control register on the model of the CPU overall is capable of being examined by creating a test program by using the ASI command.

The emulation on the CPU overall is capable of being performed in the examination of the system control of the CPU, thereby improving quality of the CPU.

By incorporating the I2C command controller and the I2C command execution unit in the invention, the I2C command execution unit is capable of being accessed through the I2C controller from the software and the hardware information is capable of being read without a service processor. This makes it possible to perform setting of the CPU 100 with the CPU 100 alone without using the service processor. Furthermore, the setting of the CPU is capable of being changed, thereby changing the configuration of the CPU to that adaptive to the software. As a result, processing performance of the CPU is capable of being improved.

Furthermore, the software is capable of reading the hardware information of the CPU, thereby avoiding fetal failure based on the obtained failure information.

In addition, a function of controlling setting of hardware of the CPU is capable of being reduced even in a system that needs the service processor, thereby reducing cost with simplification of the service processor.

### Second Embodiment

The invention may be executed in various different modes other than the above-mentioned embodiment. In a second embodiment, described is another embodiment encompassed in the invention.

### (Debug of Error Control Logic)

The invention can be used for debug of an error control logic so as to guarantee circuit quality thereof.

The service processor writes a value, for example, "0×123456789abcdef" into the data [63:0] of the shift register included in the functional block. Furthermore, the service processor also writes the number of failure flag latches connected to the I2C command execution unit into the shift length register.

Then, the I2C command controller 112 sets "1" to the flag freeze register such that the failure flag is not updated. Subsequently, the I2C command controller 112 issues a command to read the failure flag latch until the value of the shift length register is "0".

When the value written into the shift register is transmitted through the failure flag register and is stored in the shift register, again, it is possible to determine that the control circuit of the failure flag register is normal. On the other hand, when the right value is not returned to the shift register, error of the connection of the control circuit or the failure flag register is capable of being detected.

### (CPU Operation Simulation by Pseudo Failure)

An operation when pseudo failure occurs on the CPU is capable of being also simulated by setting the failure flag latch connected to the shift register to "1" by using the writing method into the shift register.

For example, the service processor writes "1" into any bit of the shift register. Then, the I2C command controller 112 sets a freeze signal to "1" such that the failure flag register is not updated. Subsequently, a number that is individually allocated to a target FF on which the pseudo failure of the failure flag latch is generated is written into the shift length register and a read command is issued. As a result, the value written into the shift register is made to shift to the target FF on which the pseudo failure of the failure flag register is generated and the value of the target FF on which the pseudo failure occurs is changed to "1". This method makes it possible to perform simulation of an operation when the CPU gets out of order.

### (System Configurations etc.)

The entire or a part of the respective pieces of processing described in the above-mentioned embodiment that are performed automatically is also capable of being performed manually. Alternatively, the entire or a part of the respective pieces of processing described in the above-mentioned embodiment that is performed manually is also capable of being performed automatically by a known method. In addition, the processing procedures, the control procedures, and the specific names referred to in the above-mentioned description and the drawings are capable of being changed arbitrarily unless otherwise specified.

The pieces of information stored in the storage unit as illustrated in the drawings are merely examples and the pieces of information are not necessarily stored as illustrated in the drawings.

Furthermore, the order of the pieces of processing at the respective steps in the respective processes described in the above-mentioned embodiment are capable of being changed depending on the various loads or usage conditions.

The respective constituent components as illustrated in the drawings are functionally conceptual and are not necessarily configured as illustrated in the drawings physically. For example, the I2C command interpretation unit 111 and the I2C command controller 112 may be integrated in the common unit 110.

### [Explanation of Reference]

- 10: service processor
- 100: CPU
- 110: common unit
- 111: I2C command interpretation unit
- 112: I2C command controller
- 113, 122, 131, 141, 151 I2C: command execution unit
- 113a: shift-enb
- 113B: shift length register
- 113c: shift register
- 114, 123, 132, 142, 152: failure flag latch
- 115: I2C receive register
- 116: flag freeze register
- 120: core unit
- 121: direction controller
- 130: L2 cache controller
- 140: input/output controller
- 150: memory controller

## Claims

1. A processor including a circuit unit, the processor comprising:
a state information holding unit configured to hold state information indicating a state of the circuit unit;
a direction controller configured to decode a control direction generation direction for generating a control direction that is contained in a program;
a direction generator configured to generate a state information read direction when the control direction generation direction decoded by the direction controller is a control direction generation direction for generating a state information read direction for reading the state information from the state information holding unit, and
a direction execution unit configured to read the state information from the state information holding unit based on the state information read direction generated by the direction generator so as to store the state information in a register unit that is capable of being read from a program.

2. The processor according to claim 1, wherein
when the control direction generation direction decoded by the direction controller is a control direction generation direction for generating a state information rewrite direction for rewriting the state information held by the state information holding unit into specified information, the direction generator generates the state information rewrite direction, and
the direction execution unit rewrites the state information held by the state information holding unit into the specified information based on the state information rewrite direction generated by the direction generator.

3. The processor according to claim 1, further comprising:
a lock information holding unit configured to hold lock information for suppressing update of the state information held by the state information holding unit, wherein
the state information holding unit keeps holding state information held without updating the state information while the lock information holding unit holds the lock information.

4. The processor according to claim 1, wherein
the processor includes, as the circuit unit, a core unit that reads and executes a direction, an L2 cache controller that executes control of an L2 cache, an input/output controller that controls input/output of information to/from an input/output device connected to the processor, a memory controller that executes control of a memory, and a common unit that is connected to each of the core unit, the L2 cache controller, the input/output controller, and the memory controller,
the core unit includes the direction controller and the register unit,
the common unit includes the direction generator, and each of the core unit, the L2 cache controller, the input/output controller, the memory controller, and the common unit includes the direction execution unit and the state information holding unit.

5. The processor according to claim 4, wherein the direction generator generates the state information read direction, determines which of the direction execution units of the core unit, the L2 cache controller, the input/output controller, the memory controller, and the common unit the state information read direction is transmitted to, and transmits the generated state information read direction to the determined direction execution unit.

6. A control method of an processor including a circuit unit, the control method comprising:
decoding, by a direction controller included in the processor, a control direction generation direction for generating a control direction to read state information indicating a state of the circuit unit that is contained in a program;
generating, by a direction generator included in the processor, a state information read direction based on the control direction generation direction decoded by the direction controller, and
reading, by a direction execution unit included in the processor, the state information indicating the state of the circuit unit from a state information holding unit that holds the state information based on the state information read direction generated by the direction generator so as to store the state information in a register unit that is capable of being read from a program.

7. The control method of the processor according to claim 6, the control method further comprising:
generating, by the direction generator, a state information rewrite direction for rewriting information held by the state information holding unit into specified information based on the control direction generation direction decoded by the direction controller, and
rewriting, by the direction execution unit, the information held by the state information holding unit into the specified information based on the state information rewrite direction generated by the direction generator.

8. The control method of the processor according to claim 6, wherein
the processor further includes a lock information holding unit configured to hold lock information for suppressing update of the state information held by the state information holding unit, and
the state information holding unit keeps holding state information held without updating the state information while the lock information holding unit holds the lock information.

9. The control method of the processor according to claim 6, wherein
the processor further includes, as the circuit unit, a core unit that reads and executes a direction, an L2 cache controller that executes control of an L2 cache, an input/output controller that controls input/output of information to/from an input/output device connected to the processor, a memory controller that executes control of a memory, and a common unit that is connected to each of the core unit, the L2 cache controller, the input/output controller, and the memory controller,
the direction controller included in the core unit decodes the control direction generation direction,
the direction generator included in the common unit generates the state information read direction based on the control direction generation direction decoded by the direction controller, and
the direction execution unit included in each of the core unit, the L2 cache controller, the input/output controller, the memory controller, and the common unit reads the state information from the state information holding unit included in the circuit unit including the direction execution unit based on the state information read direction so as to store the state information in the register unit included in the core unit.

10. The control method of the processor according to claim 9, wherein the direction generator generates the state information read direction, determines which of the direction execution units of the core unit, the L2 cache controller, the input/output controller, the memory controller, and the common unit the state information read direction is transmitted to, and transmits the generated state information read direction to the determined direction execution unit.
